# EUROPEAN PATENT APPLICATION

(11) **EP 2 949 514 A1**
(43) Date of publication of application: **02.12.2015**
(21) Application number: 14804512.3
(22) Date of filing: 30.05.2014
(51) Int. Cl.: B60R 11/02, B60J 5/04, H01Q 1/22, H01Q 1/32, H01Q 1/38, H01Q 1/40, H01Q 9/16

(54) **WINDOW FRAME**

(30) Priority: 31.05.2013 JP 2013116430; 10.12.2013 JP 2013255476
(71) Applicant: Fujikura Ltd., Tokyo 135-8512 (JP)
(72) Inventor: NIIHARA, Yoshihiro, Sakura-shi Chiba 285-8550 (JP); GUAN, Ning, Sakura-shi Chiba 285-8550 (JP); YAMAGUCHI, Yuichiro, Sakura-shi Chiba 285-8550 (JP); CHIBA, Hiroshi, Tokyo 135-8512 (JP); TAYAMA, Hiroiku, Sakura-shi Chiba 285-8550 (JP)
(74) Representative: Cabinet Plasseraud
(86) International application number: PCT/JP2014/064536
(87) International publication number: WO 2014/192949

(57) **Abstract**

A main body (100) of a window frame (10) in accordance with an embodiment of the present invention includes a holding section (130) that holds an end part of a window (32) with the use of a window guide (36) made of rubber. A film antenna (200) incorporated into the main body (100) includes a feed section (230) located so as not to overlap the window guide (36) when the main body (100) in a plan view is viewed from a vehicle-exterior side.

## Description

### Technical Field

The present invention relates to a window frame to be mounted on a vehicle such as an automobile.

### Background Art

In a case where an antenna is provided on a vehicle, it is preferable to provide the antenna at as high a position of the vehicle as possible in order to increase transmitting and receiving efficiency of the antenna. Therefore, a vehicle-specific antenna is to be provided on, for example, a rooftop, a windowpane or the like.

A known example of an antenna to be provided at a roof part of a body of a vehicle is an antenna device of a shark fin type.

As antennas to be provided on windowpanes of vehicles, glass antennas disclosed in Patent Literature 1 and 2 are known.

Patent Literature 1 discloses an automobile-specific, high-frequency glass antenna configured such that an antenna conductor and a feed section are provided between a glass plate inside a vehicle (having the same meaning as "vehicle-interior side") and a glass plate on a vehicle-exterior side. It is considered that the glass antenna can obtain excellent antenna characteristics (high antenna gain and high F/B ratio) even in a case where (i) the antenna conductor and the feed section are located away from a metal body of the vehicle and (ii) a desired broadcasting frequency band is a wide range of broadcasting frequency bands.

Patent Literature 2 discloses a windowpane antenna configured such that a hot-side antenna element is provided in a horizontal direction to be electromagnetically joined to an upper horizontal side of a metal window frame. It is considered that according to the antenna, it is possible to horizontally provide even a vertical polarized wave antenna while hardly causing reception sensitivity to decrease.

### Citation List

### [Patent Literature]

[Patent Literature 1] Japanese Patent Application Publication, Tokukai, No. 2008-22538 (Publication Date: January 31, 2008)
[Patent Literature 2] Japanese Patent Application Publication, Tokukaihei, No. 7-46016 (Publication Date: February 14, 1995)

### Summary of Invention

### Technical Problem

However, in a case where an antenna device of a shark fin type is provided on a roof part of a vehicle, the antenna device protrudes from a root surface. This significantly affects a design and aerodynamic characteristics of the automobile.

In addition, a glass antenna disclosed in each of Patent Literature 1 and 2 is provided on a transparent windowpane, and is therefore visible from both the interior and exterior of the vehicle. This ends up considerably affecting an external appearance of the vehicle and visibility from the interior of the vehicle.

Conventionally, it has been thus difficult to provide a vehicle-specific antenna so as to simultaneously achieve (i) restriction of an effect on an external appearance of a vehicle and (ii) excellent antenna characteristics.

The present invention has been made in view of the problem, and it is an object of the present invention to realize a vehicle-specific antenna device that can obtain an excellent antenna characteristic while restricting an effect on an external appearance a vehicle.

### Solution to Problem

In order to attain the object, a window frame of the present invention is to be attached to a metal frame, the metal frame having an opening in which a window is to be provided and including (i) a first plane part located on an outer side of the metal frame and (ii) a second plane part located on an inner side of the metal frame and located closer to a vehicle-interior side than is the first plane part, said window frame including: a window frame main body to be attached to at least part of the metal frame, which part is located on a vehicle-exterior side; and an antenna incorporated into the window frame main body, the window frame main body including a holding section which is a part facing the second plane part and which holds an end part of the window by use of a window guide made of rubber, and the antenna including a feed section located so as not to overlap the window guide when the window frame main body in a plan view is viewed from the vehicle-exterior side.

### Advantageous Effects of Invention

With the present invention, it is possible to realize a vehicle-specific antenna device that can obtain an excellent antenna characteristic while restricting an effect on an external appearance a vehicle.

### Brief Description of Drawings

Fig. 1 is a perspective view illustrating (i) a window frame in accordance with an embodiment of the present invention and (ii) an external appearance of a vehicle.
Fig. 2 is a set of three views illustrating a configuration of the window frame in accordance with the embodiment of the present invention.
Fig. 3 illustrates an external appearance of a rear seat door to which the window frame illustrated in Fig. 2 is attached.
   (a) of Fig. 4 is a cross-sectional view of a part (a part taken along the line C-C) of the rear seat door 30 illustrated in Fig. 3. (b) of Fig. 4 is an enlarged view of a part (a part taken between the line B-B and the line C-C) of the rear seat door 30 illustrated in Fig. 3.
Fig. 5 is a graph showing gain characteristics of the film antenna in accordance with the present embodiment and of a comparative film antenna.
Fig. 6 is a graph showing VSWR (Voltage Standing Wave Ratio) characteristics of the film antenna in accordance with the present embodiment and of the comparative film antenna.
Fig. 7 illustrates Modification 1 of the film antenna in accordance with the present embodiment.
Fig. 8 illustrates Modification 2 of the film antenna in accordance with the present embodiment.
Fig. 9 illustrates Modification 3 of the film antenna in accordance with the present embodiment.
Fig. 10 illustrates Modification 4 of the film antenna in accordance with the present embodiment.
Fig. 11 illustrates Modification 5 of the film antenna in accordance with the present embodiment.
Fig. 12 illustrates Modification 6 of the film antenna in accordance with the present embodiment.
Fig. 13 illustrates Modification 7 of the film antenna in accordance with the present embodiment.
Fig. 14 illustrates Modification 8 of the film antenna in accordance with the present embodiment.
Fig. 15 is a plan view illustrating Modification 9 of the film antenna in accordance with the present embodiment.
Fig. 16 is a cross-sectional view taken along the line A-A across the film antenna illustrated in Fig. 15.
Fig. 17 is a plan view illustrating Modification 10 of the film antenna in accordance with the present embodiment.
Fig. 18 is a cross-sectional view taken along the line A-A across the film antenna illustrated in Fig. 17.
Fig. 19 illustrates Modification 1 of the window frame in accordance with the present embodiment.
Fig. 20 illustrates Modification 2 of the window frame in accordance with the present embodiment.
Fig. 21 illustrates Modification 3 of the window frame in accordance with the present embodiment.
Fig. 22 illustrates Modification 4 of the window frame in accordance with the present embodiment.
Fig. 23 illustrates Modification 5 of the window frame in accordance with the present embodiment.

### Description of Embodiments

The following description will discuss an embodiment of the present invention with reference to drawings. Note that hereinafter, (i) a direction corresponding to a front-rear direction of a vehicle 20 (i.e. x-axis direction in a drawing) will be referred to as "front-rear direction," (ii) a direction corresponding to a crosswise direction of the vehicle 20 (i.e. y-axis direction in the drawing) will be referred to as "crosswise direction," and (iii) a direction corresponding to a vertical direction of the vehicle 20 (i.e. z-axis direction in the drawing) will be referred to as "vertical direction."

### [Overview of Window Frame 10]

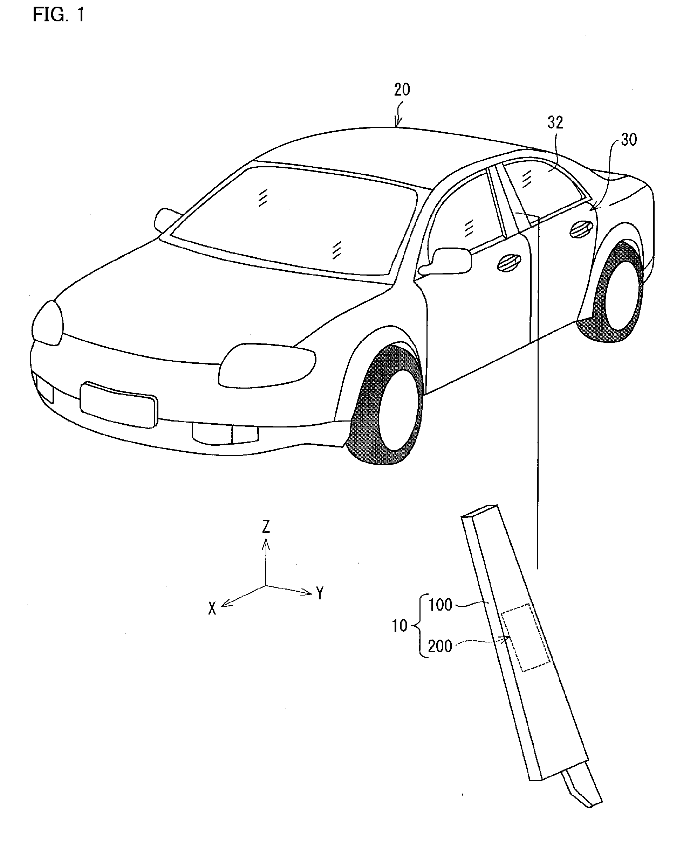

Fig. 1 is a perspective view illustrating (i) a window frame 10 in accordance with an embodiment of the present invention and (ii) an external appearance of the vehicle 20. The window frame 10 illustrated in Fig. 1 is a thin-plate-like part having a rectangular shape which is long substantially in the vertical direction (z-axis direction in Fig. 1). The window frame 10 is a part to be attached to a door frame (part of a frame part around a window 32 of a rear seat door 30, which part is located between the window 32 and a window of a front seat door) of the rear seat door 30 of the vehicle 20.

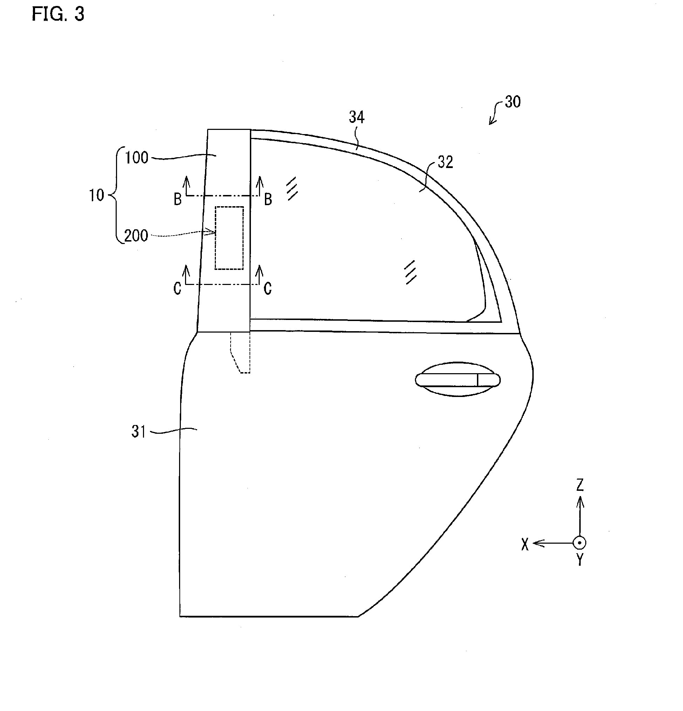

The rear seat door 30 is configured to include a door frame 34 (see Fig. 3) which (i) is made of metal and (ii) has an opening for a rear seat window 32 to be provided. The window frame 10 is to be attached to a surface (surface on a vehicle-exterior side) of a part constituting a B pillar part of the door frame 34. Therefore, the window frame 10 may be called "B pillar cover."

The window frame 10 includes a main body 100 and a film antenna 200, and is configured such that the film antenna 200 is incorporated into the main body 100.

The main body 100 is a resin (non-metal) part, and forms an external appearance of the window frame 10. The main body 100 is a thin-plate-like part having a rectangular shape which is long substantially in the vertical direction (z-axis direction in Fig. 3). More specifically, the main body 100 has a shape whose width (width in the x-axis direction in Fig. 3) gradually becomes, in line with a shape of the B pillar part, wider toward a lower part (in a negative direction of the z-axis).

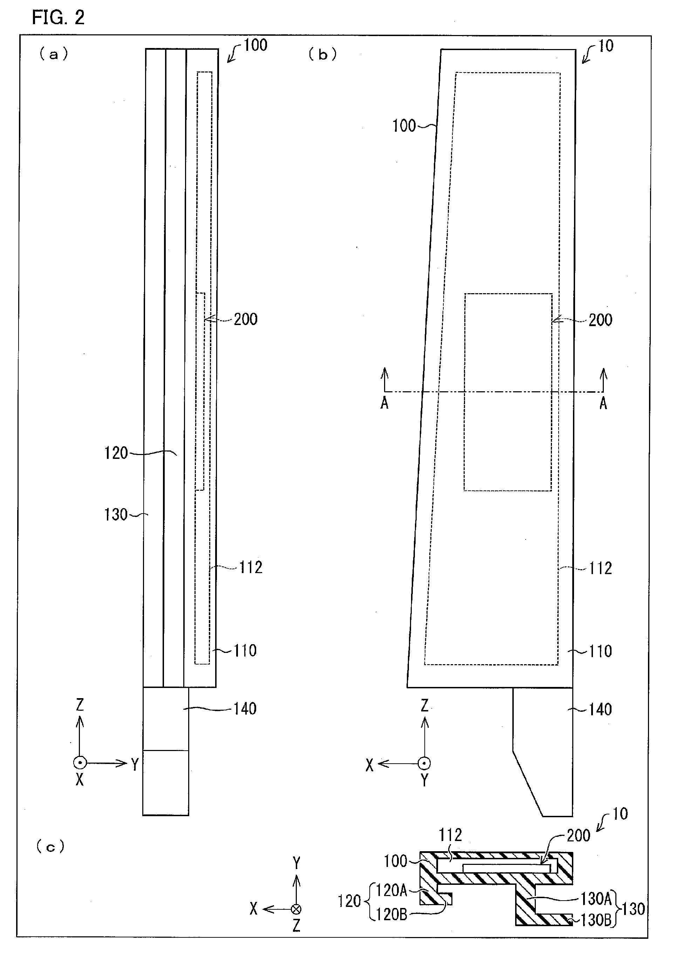

As has been described, the film antenna 200 is incorporated into the main body 100. The film antenna 200 is intended for receiving radio waves falling within a target frequency band. Specifically, the main body 100 has an inner space 112 therein (see Fig. 2). The film antenna 200 is provided in the inner space 112 so that the film antenna 200 is prevented from being exposed to the outside of the vehicle and therefore impairing the external appearance of the vehicle.

According to the present embodiment, the film antenna 200 is preferably an antenna for DAB or for 3G/LTE. Note that the film antenna 200 is not limited as such, but can be an antenna for a purpose other than the above. However, since the film antenna 200 is provided on the vehicle 20 so as to have an orientation substantially perpendicular to a horizontal plane, the film antenna 200 is preferably an antenna for receiving vertical polarized waves in view of an increase in reception sensitivity. Examples of such an antenna encompass an antenna for DAB, an antenna for 3G/LTE, and an antenna for FM/AM broadcasting.

Note that the present embodiment discusses an example in which the film antenna 200 is provided in the window frame 10 which is provided on the rear seat window 32 on a left side (in a positive direction of the y-axis in Fig. 2) of the vehicle 20. Note, however, that the film antenna 200 can be provided on any other window frame. In such a case, a window frame, on which the film antenna 200 is provided, can be a window frame of a window that can be opened/closed, or can be a window frame of a window that cannot be opened/closed. For example, the film antenna 200 can be provided on a window frame of a rear seat window on a right side (in a negative direction of the y-axis in Fig. 2) of the vehicle 20. Alternatively, the film antenna 200 can be provided on a window frame of a front seat window on the left side of the vehicle 20, or can be provided on a window frame of a front seat window on the right side of the vehicle 20.

### [Configuration of Window Frame 10]

A configuration of the window frame 10 will be described next with reference to Figs. 2 through 4. Fig. 2 is a set of three views illustrating the configuration of the window frame 10 in accordance with the embodiment of the present invention. (a) of Fig. 2 is a side view of the window frame 10. (b) of Fig. 2 is a plan view of the window frame 10. (c) of Fig. 2 is a cross-sectional view taken along the line A-A across the window frame 10 illustrated in (b) of Fig. 2.

As illustrated in Fig. 2, the main body 100 of the window frame 10 includes (i) a main part 110, (ii) a door frame supporting section 120 which is provided on a back side (inside the vehicle) of the main part 110 and which is provided toward a front side, and (iii) a holding section 130 which is provided on the back side (inside the vehicle) of the main part 110 and which is provided toward a rear side. Note that the holding section 130 is provided with an extending section 140 which extends downwards further than the main part 110.

### (Main part 110)

The main part 110 is a thin-plate-like part which (i) constitutes a front surface (surface on the vehicle-exterior side) of the main body 100 and (ii) is long in the vertical direction (z-axis direction in Fig. 2). As illustrated in Fig. 2, the main part 110 has the inner space 112 that can contain the film antenna 200 therein. For example, the main part 110 is configured such that the main part 110 can be divided in the thickness direction (y-axis direction) into two parts with the inner space 112 serving as a boundary. In this case, since the main part 110 is divided into two parts so as to cause the inner space 112 to be exposed, it is possible to provide the film antenna in the inner space 112. In so doing, the film antenna 200 is preferably fixed in the inner space 112 by use of some type of fixing means (e.g. an adhesive, a sticky tape or the like). Then, the two parts, into which the main part 110 has been divided, are assembled together, so that the inner space 112 is blocked in the main body 100 again. This causes the film antenna 200 to be contained in the inner space 112. Since the film antenna 200 is thus provided in the inner space 112, the film antenna 200 can be provided on the vehicle 20 so as to be integrated with the window frame 10 without being exposed to the outside of the vehicle.

### (Door Frame Supporting Section 120)

The door frame supporting section 120 is a part that extends in the vertical direction (z-axis direction in Fig. 2) along an end part of a front side (in a positive direction of the x-axis in Fig. 2) of the main part 110 on the back side (in the negative direction of the y-axis in Fig. 2) of the main part 110 so that the door frame supporting section 120 supports an end part of the door frame 34. As illustrated in (c) of Fig. 2, the door frame supporting section 120 is constituted by combining, in the form of a letter L, (i) a first wall part 120A which is perpendicular to the back surface of the main part 110 and (ii) a second wall part 120B which is parallel to the back surface of the main part 110. This causes the door frame supporting section 120 to form, on the back side of the main part 110, an insertion entry having an opening facing backwards. The insertion entry can have an end part of the door frame 34 inserted therein.

### (Holding Section 130)

The holding section 130 is a part that extends in the vertical direction (z-axis direction in Fig. 2) along an end part of a rear side (in the negative direction of x-axis in Fig. 2) of the main part 110 on the back side (in the negative direction of the y-axis in Fig. 2) of the main part 110 of that the holding section 130 holds an end part of the rear seat window 32. As illustrated in (c) of Fig. 2, the holding section 130 is constituted by combining, in the form of a letter L, (i) a first wall part 130A which is perpendicular to the back surface of the main part 110 and (ii) a second wall part 130B which is parallel to the back surface of the main part 110. This causes the holding section 130 to form, on the back side of the main part 110, an insertion entry having an opening facing backwards. The insertion entry is equipped with a window guide 36, and can have the end part of the rear seat window 32 inserted therein.

### (Extending Section 140)

The extending section 140 is a part that extends, from the holding section 130, downwards (in the negative direction of the z-axis in Fig. 2) further than a lower end part (end part facing the negative direction of the z-axis in Fig. 2) of the main part 110. For example, in a case where the window frame 10 is attached to the door frame 34, the extending section 140 is inserted in a gap located at a lower part of an attachment position. This allows the end part of the rear seat window 32 to be held by the extending section 140 even in a case where, for example, the rear seat window 32 is entirely opened.

### [Configuration of Rear Seat Door 30]

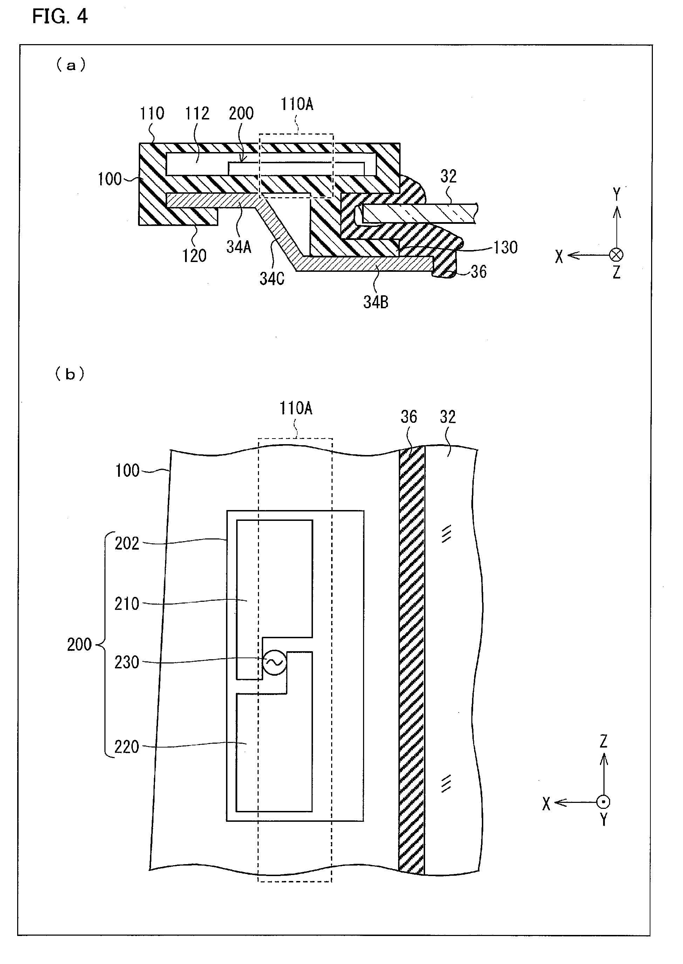

A configuration of the rear seat door 30 including the window frame 10 in Fig. 2 will be described next with reference to Figs. 3 and 4. Fig. 3 illustrates an external appearance of the rear seat door 30 to which the window frame 10 illustrated in Fig. 2 is attached.

As illustrated in Fig. 3, the window frame 10 is attached to part of the door frame 34 surrounding the rear seat window 32, which part is located on the vehicle-exterior side of the part constituting the B pillar of the rear seat door 30. In so doing, the extending section 140 of the window frame 10 is inserted in a gap of the rear seat door 30, which gap is located at a lower part of the B pillar part. Specifically, the extending section 140 is inserted in the gap provided in a door body 31. The rear seat door 30 is constituted by the door body 31 and the door frame 34 in combination. Note that the door body 31 is provided in a form so that (i) the door body 31 is integrated with the door frame 34 or (ii) the door body 31 is constituted by a door body on the vehicle-interior side and a door body on the vehicle-exterior side, which door bodies sandwich a lower end part of the door frame 34. Since the window frame 10 is thus provided, the film antenna 200 incorporated into the window frame 10 is provided on the B pillar part while having the orientation substantially perpendicular to the horizontal plane.

Fig. 4 illustrates, in more details, (i) a configuration of the B pillar part of the door frame 34 and (ii) a state in which the window frame 10 is attached to the B pillar part. (a) of Fig. 4 is a cross-sectional view of a part (a part taken along at the line C-C) of the rear seat door 30 illustrated in Fig. 3. (b) of Fig. 4 is an enlarged view of a part (a part corresponding to a part taken between the line B-B and the line C-C) of the rear seat door 30 illustrated in Fig. 3.

### [Configuration of Door Frame 34]

As illustrated in (a) of Fig. 4, the door frame 34 (B pillar part in Fig. 4) includes (i) a first plane part 34A located at the front side (in the positive direction of the x-axis in Fig. 4) and (ii) a second plane part 34B located at the rear side (in the negative direction of the x-axis in Fig. 4). The second plane part 34B is located closer to the vehicle-interior side (in the negative direction of the y-axis in Fig. 4) than is the first plane part 34A. That is, there is a level difference between the first plane part 34A and the second plane part 34B. This is because the second plane part 34B, which overlaps the end part of the rear seat window 32, sinks in toward inside the vehicle (in the negative direction of the y-axis in Fig. 4) as compared with the first plane part 34A so that the rear seat window 32 is contained in the door frame 34. In the door frame 34, the first plane part 34A and the second plane part 34B are connected to each other via an inclined surface 34C provided therebetween.

### [Attachment of Window Frame 10]

As illustrated in (a) of Fig. 4, an end part of the first plane part 34A of the door frame 34 is inserted in the insertion entry of the door frame supporting section 120 which is included in the window frame 10. The insertion entry of the holding section 130 included in the window frame 10 is equipped with the window guide 36 (which may also be referred to as "glass run channel") (i) in which a groove is provided along the end part of the rear seat window 32 and (ii) which is made of rubber. Then, the end part of the rear seat window 32 is inserted in the groove provided in the window guide 36. This causes the window frame 10 to be attached to the B pillar part of the door frame 34 so as to hold the end part of the rear seat window 32. The window frame 10 can be fixed to the door frame 34 more firmly by use of additional fixing means (e.g. an adhesive tape, an adhesive, a screw, a rivet, a pin or the like).

According to the present embodiment, the window guide 36 is made of EPDM (ethylene-propylene-diene rubber) which is a material having excellent weather resistance, cold resistance, ozone resistance, aging resistance, solvent resistance and the like. According to the present embodiment, the material, of which the window guide 36 is made, also contains carbon black mainly for the purpose of increasing strength of the window guide 36.

### [Configuration of Film Antenna 200]

As illustrated in Fig. 4, the film antenna 200 is provided in the inner space 112 of the main body 100 of the window frame 10. The film antenna 200 is configured to include a flexible substrate 202 and an antenna pattern (conductor pattern) formed on a front surface of the flexible substrate 202. The flexible substrate 202 is a flexible and thin-plate-like member. The flexible substrate 202 is made of, for example, a dielectric film (e.g. polyimide film). The antenna pattern has a form for receiving radio waves falling within a target frequency band. For example, the antenna pattern is configured to include a ground plane, an antenna element, a feed section, a short-circuit member and the like. The film antenna 200 is categorized as a loop antenna, a monopole antenna, a reversed F-shaped antenna or the like, depending on the antenna pattern. The antenna pattern is made of a thin-plate-like conductive foil (e.g. copper foil).

As illustrated in (b) of Fig. 4, the film antenna 200 of the present embodiment is a dipole antenna which is configured to include (i) the flexible substrate 202, (ii) a first conductor film 210 (conductor pattern) serving as a first antenna element, (iii) a second conductor film 220 (conductor pattern) serving as a second antenna element, and (iv) a feed section 230. (b) of Fig. 4 shows the film antenna 200 with use of a solid line to help understand an arrangement and the configuration of the film antenna 200. However, it is evident from (a) of Fig. 4 and the like that the film antenna 200 is actually provided in the inner space 112 of the main body 100.

### (First Conductor Film 210 and Second Conductor Film 220)

In the example shown in (b) of Fig. 4, the first conductor film 210 and the second conductor film 220 are juxtaposed in the vertical direction (z-axis direction in Fig. 4) so as to face each other with the feed section 230 sandwiched therebetween. More specifically, the first conductor film 210 is made up of (i) a main portion having a vertically long rectangular shape and (ii) a protruding portion that protrudes downwards from a lower-left corner of the main portion toward the second conductor film 220. The second conductor film 220 is made up of (i) a main portion having a vertically long rectangular shape and (ii) a protruding portion that protrudes upwards from an upper-right corner of the main portion toward the first conductor film 210. A right side of the protruding portion of the first conductor film 210 and a left side of the protruding portion of the second conductor film 220 face each other with the feed section 230 sandwiched therebetween.

### (Feed Section 230)

The feed section 230 is provided between the protruding portion of the first conductor film 210 and the protruding portion of the second conductor film 220. To the feed section 230, a tip part of a coaxial cable (not illustrated) is connected. Specifically, the feed section 230 is configured to include, for example, (i) a first feed point provided on the protruding portion of the first conductor film 210 and (ii) a second feed point provided on the protruding portion of the second conductor film 220. To the first feed point, an internal conductor of the tip part of the coaxial cable is connected. To the second feed point, an external conductor of the tip part is connected. A terminal end part of the coaxial cable is connected to a supply destination (e.g. an amplifier circuit, any communication device and or the like) to which an electric signal generated by the film antenna 200 is supplied.

### (Arrangement of Feed point 230)

Note that a region of the main part 110 of the main body 100, which region overlaps neither the window guide 36 nor the first plane part 34A when the main part 110 in a plan view is viewed from the vehicle-exterior side (from the positive direction of the y-axis in Fig. 4), will be defined as "non-overlapping region 110A" (see (a) and (b) of Fig. 4). The significance of the window frame 10 of the present embodiment lies in the fact that the feed section 230 of the film antenna 200 is provided within the non-overlapping region 110A as illustrated in (b) of Fig. 4. That is, the feed section 230 is provided in the inner space 112 so as to overlap neither the window guide 36 nor the first plane part 34A.

The inventors of the present invention found that, in view of radiant efficiency, a part (such as the feed section 230), on which electric currents contributing to radiation are concentrated, is preferably not provided in the proximity of the rubber-made window guide 36. In other words, the inventors found that in a case where the film antenna 200 is incorporated into the window frame 10, it is possible to restrict a reduction in radiant efficiency of the film antenna 200 by providing the feed section 230 such that the feed section 230 does not overlap the rubber-made window guide 36. In particular, in a case where EPDM is used as a material of which the window guide 36 is made and where the material contains carbon black, the configuration in which the feed section 230 does not overlap the window guide 36 is more effective. This is because such a material, although generally put to widespread use as a material for a window guide, is relatively high in dielectric dissipation factor which is a factor indicating a degree to which electric energy is lost.

In view of such findings of the inventors, the window frame 10 of the present embodiment is configured such that the feed section 230 does not overlap the window guide 36. This realizes a vehicle-specific antenna device which can produce an excellent antenna characteristic.

### [Example]

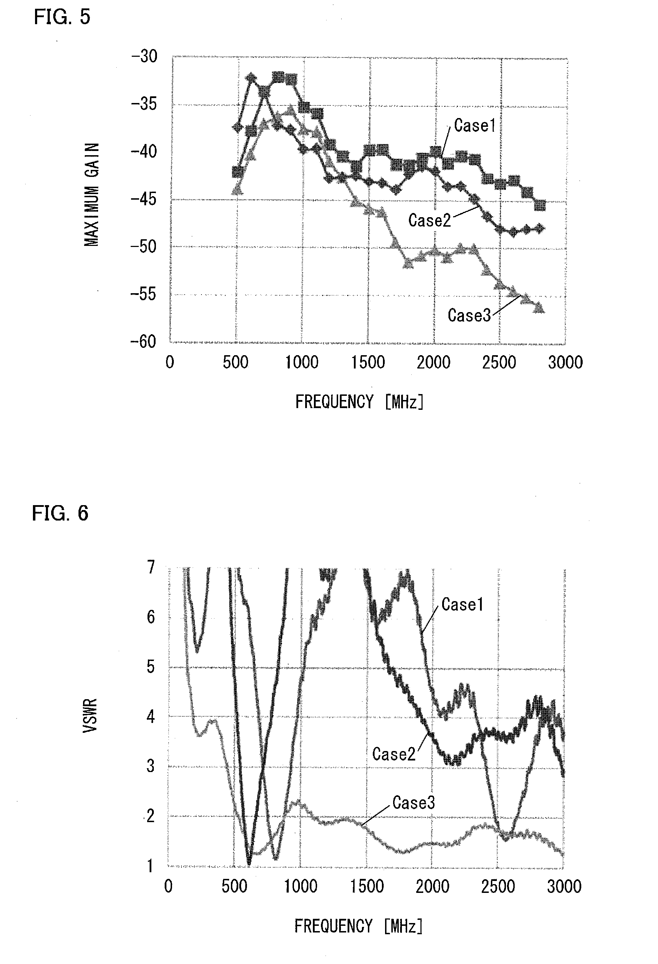

An example of the present invention will be described below with reference to Figs. 5 and 6. Fig. 5 is a graph showing gain characteristics of the film antenna 200 in accordance with the present embodiment and of a comparative film antenna. Fig. 6 is a graph showing VSWR (Voltage Standing Wave Ratio) characteristics of the film antenna 200 in accordance with the present embodiment and of the comparative film antenna. The present example compares respective radiation characteristics of (i) the film antenna 200 of the present embodiment configured such that the feed section does not overlap the window guide and (ii) the comparative film antenna configured such that a feed section overlaps a window guide. Note that the present example employed a window guide 36 having a dielectric dissipation factor of approximately 1 at a frequency of 700 MHz.

In the graphs of Figs. 5 and 6, Case 1 and Case 2 show the characteristics of the film antenna 200 in accordance with the present embodiment. Case 1 shows characteristics of the film antenna 200 in a case where the window guide 36 is removed from the window frame 10. Case 2 shows characteristics of the film antenna 200 in a case where the window guide 36 is mounted on the window frame 10. In contrast, Case 3 shows the characteristics of the comparative film antenna.

Figs. 5 and 6 indicate that in Case 3 where the feed section is located in the proximity of the window guide, gains and VSWR values are lower within most frequency bands equal to or less than 3 GHz in comparison with those in Case 1 and Case 2 where the feed section is not located in the proximity of the window guide. These results signify that a greater amount of dielectric loss occurs in a case where the feed section is located in the proximity of the window guide. The above verification demonstrated that the window frame 10 of the present embodiment produce a superior radiation characteristic by employing the configuration in which the feed section 230 does not overlap the window guide 36.

According to the window frame 10 of the present embodiment, the feed section 230 also does not overlap the first plane part 34A of the door frame. Therefore, according to the film antenna 200 of the present embodiment, the feed section 230 is also spaced from a metal plate. This causes a reduction in radiation characteristic to be more restricted. Note that the feed section 230 of the film antenna 200 only needs to be provided at least so as not to overlap the window guide 36, and can therefore overlap the first plane part 34A. Note also that in view of causing the feed section 230 to be spaced from the metal plate, the feed section 230 can also be provided so as not to overlap the inclined surface 34C.

Alternatively, the window guide 36 can be made of a material other than EPDM (ethylene-propylene-diene rubber). A material, of which the window guide 36 is made, can also be a material containing no carbon black. In any case above, it is possible to use a material which is relatively high in dielectric dissipation factor which is a factor indicating the degree to which electric energy is lost. This allows an effect of restricting a reduction in radiant efficiency to be obtained by employing the configuration of the present embodiment in which the feed section 230 is provided so as not to overlap the window guide 36.

### [Modifications of Film Antenna]

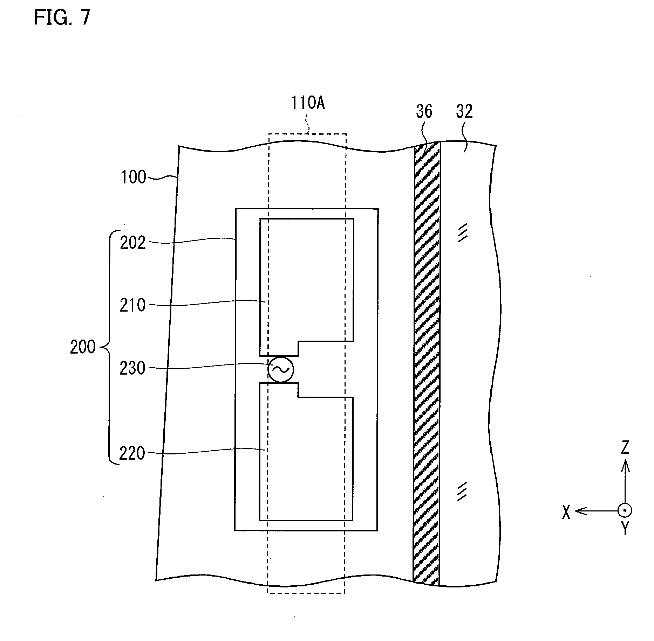

The following description will discuss, with reference to Figs. 7 through 18, modifications of the film antenna 200 included in the window frame 10 of the present embodiment. The configuration of the window frame 10 of the present embodiment is characterized by the arrangement of the feed section 230 of the film antenna 200. This allows a certain degree of effects to be produced, regardless of a type and pattern shape of an antenna. Therefore, an effect similar to that of the above-described embodiment can be obtained even in a case where the type or pattern shape of the film antenna 200 in the window frame 10 of the present embodiment is changed from that in the above-described embodiment (as illustrated in (b) of Fig. 4). A film antenna 200 shown in each of Figs. 7 through 18 is merely illustrative only, and is not intended to limit the film antenna of the present embodiment thereto.

### [Modifications 1 through 3]

Figs. 7 through 9 respectively illustrate Modifications 1 through 3 of the film antenna 200 in accordance with the present embodiment. As is the case of the film antenna 200 in the above-described embodiment (as illustrated in (b) of Fig. 4), film antennas 200 of Modifications 1 through 3 are each a dipole antenna configured to include (i) a flexible substrate 202, (ii) a first conductor film 210 serving as a first antenna element, (iii) a second conductor film 220 serving as a second antenna element, and (iv) a feed section 230.

According to the film antenna 200 of Modification 1 illustrated in Fig. 7, the first conductor film 210 and the second conductor film 220 are juxtaposed in a vertical direction (z-axis direction in Fig. 7) so as to face each other with the feed section 230 sandwiched therebetween. The first conductor film 210 is made up of (i) a main portion having a vertically long rectangular shape and (ii) a protruding portion that protrudes downwards from a lower-left corner of the main portion toward the second conductor film 220. The second conductor film 220 is made up of (i) a main portion having a vertically long rectangular shape and (ii) a protruding portion that protrudes upwards from an upper-left corner of the main portion toward the first conductor film 210. A lower side of the protruding portion of the first conductor film 210 and an upper side of the protruding portion of the second conductor film 220 face each other with the feed section 230 sandwiched therebetween.

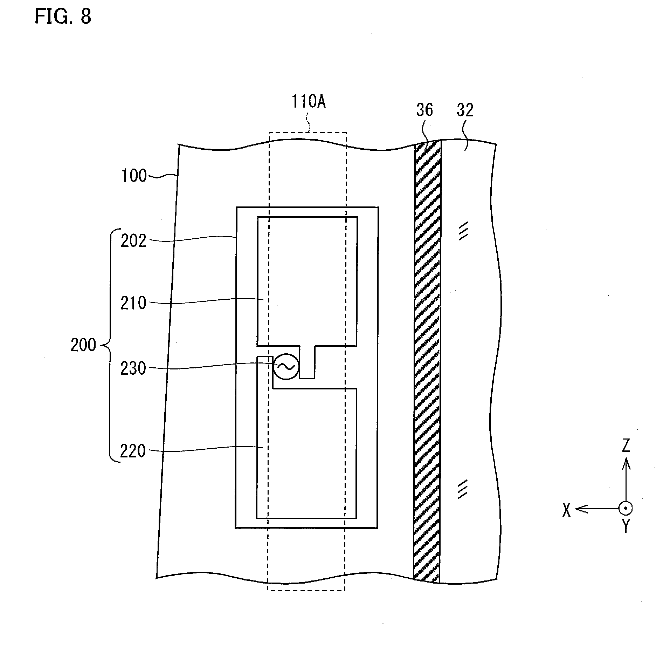

According to the film antenna 200 of Modification 2 illustrated in Fig. 8, the first conductor film 210 and the second conductor film 220 are juxtaposed in a vertical direction (z-axis direction in Fig. 8) so as to face each other with the feed section 230 sandwiched therebetween. The first conductor film 210 is made up of (i) a main portion having a vertically long rectangular shape and (ii) a protruding portion that protrudes downwards from a center of a lower part of the main portion toward the second conductor film 220. The second conductor film 220 is made up of (i) a main portion having a vertically long rectangular shape and (ii) a protruding portion that protrudes upwards from an upper-left corner of the main portion toward the first conductor film 210. A left side of the protruding portion of the first conductor film 210 and a right side of the protruding portion of the second conductor film 220 face each other with the feed section 230 sandwiched therebetween.

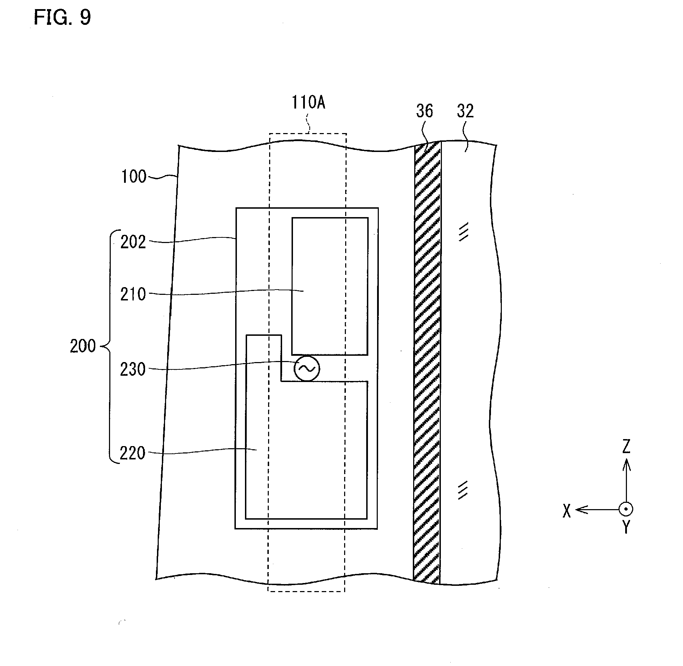

According to the film antenna 200 of Modification 3 illustrated in Fig. 9, the first conductor film 210 and the second conductor film 220 are juxtaposed in a vertical direction (z-axis direction in Fig. 9) so as to face each other with the feed section 230 sandwiched therebetween. Note, however, that the first conductor film 210 has a rectangular shape narrower in width than the shape of the second conductor film 220. The second conductor film 220 is made up of (i) a main portion having a substantially square shape and (ii) a protruding portion that protrudes upwards from an upper-left corner of the main portion toward the left of the first conductor film 210. A lower side of the first conductor film 210 and an upper side of the main portion of the second conductor film 220 face each other with the feed section 230 sandwiched therebetween.

According to any one of the film antennas 200 (dipole antennas) of Modifications 1 through 3, the feed section 230 is provided within a non-overlapping region 110A. Therefore, with any one of the film antennas 200 of Modifications 1 through 3, it is possible to obtain an excellent radiation characteristic as is the case of the film antenna 200 in accordance with the above-described embodiment.

### [Modifications 4 through 6]

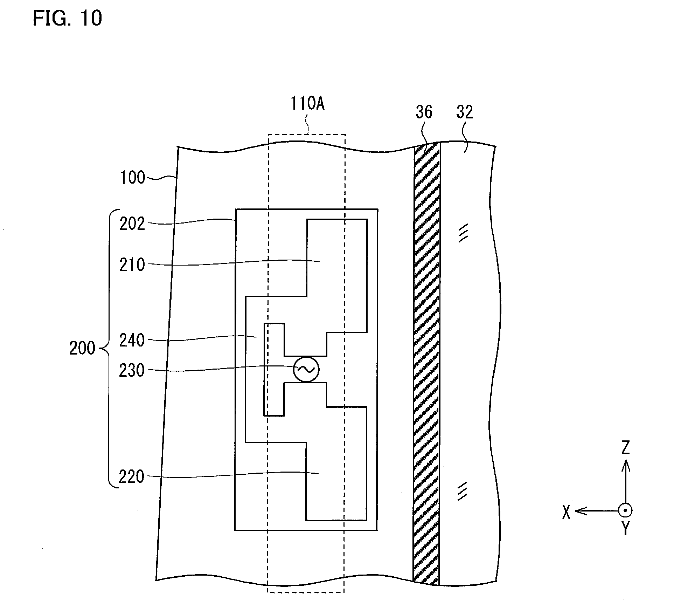

Figs. 10 through 12 respectively illustrate Modifications 4 through 6 of the film antenna 200 in accordance with the present embodiment. Film antennas 200 of Modifications 4 through 6 are each a reversed F-shaped antenna configured to include (i) a flexible substrate 202, (ii) a first conductor film 210 serving as an antenna element, (iii) a second conductor film 220 serving as a ground plane, (iv) a feed section 230, and (v) a short-circuit member 240 for causing the first conductor film 210 and the second conductor film 220 to short-circuit.

According to the film antenna 200 of Modification 4 illustrated in Fig. 10, the first conductor film 210 and the second conductor film 220 are juxtaposed in a vertical direction (z-axis direction in Fig. 10) so as to face each other with the feed section 230 sandwiched therebetween. The first conductor film 210 is made up (i) a main portion having a vertically long rectangular shape and (ii) an enlarging portion that enlarges from a lower-left corner of the main portion toward the feed section 230. The second conductor film 220 is made up of (i) a main portion having a vertically long rectangular shape and (ii) an enlarging portion that enlarges from an upper-left corner of the main portion toward the feed section 230. According to the film antenna 200 of Modification 4, the feed section 230 is provided between the enlarging portion of the first conductor film 210 and the enlarging portion of the second conductor film 220. In addition, according to the film antenna 200 of Modification 4, the short-circuit member 240, which is belt-shaped, causes the enlarging portion of the first conductor film 210 and the enlarging portion of the second conductor film 220 to short-circuit.

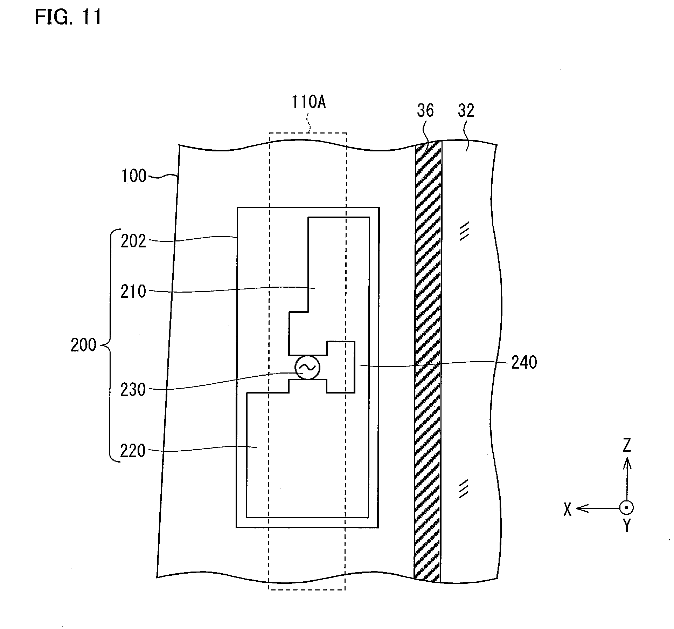

According to the film antenna 200 of Modification 5 illustrated in Fig. 11, the first conductor film 210 and the second conductor film 220 are juxtaposed in a vertical direction (z-axis direction in Fig. 11) so as to face each other with the feed section 230 sandwiched therebetween. The first conductor film 210 is made up (i) a main portion having a vertically long rectangular shape and (ii) an enlarging portion that enlarges from a lower-left corner of the main portion toward the feed section 230. The second conductor film 220 is made up of (i) a main portion having a substantially square shape and (ii) a protruding portion that protrudes from a center of an upper part of the main portion toward the feed section 230. According to the film antenna 200 of Modification 5, the feed section 230 is provided between the enlarging portion of the first conductor film 210 and the protruding portion of the second conductor film 220. In addition, according to the film antenna 200 of Modification 5, the short-circuit member 240, which is belt-shaped, causes a lower-right corner of the main portion of the first conductor film 210 and an upper-right corner of the main portion of the second conductor film 220 to short-circuit.

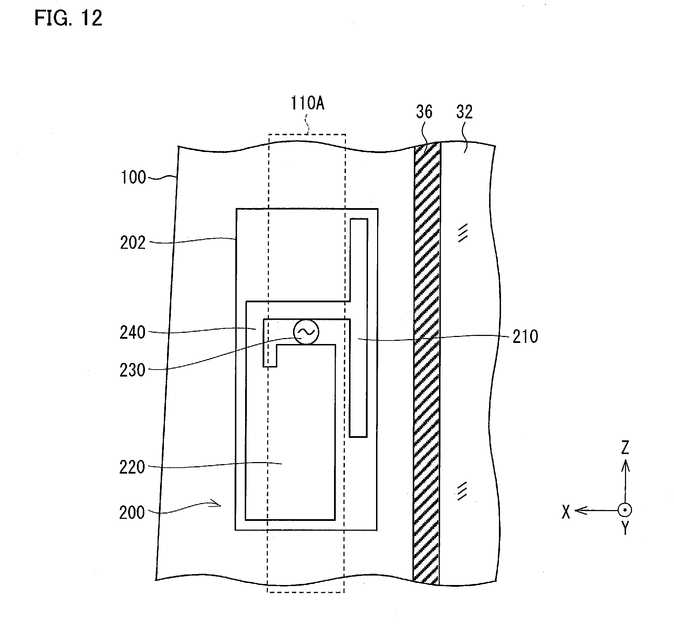

According to the film antenna 200 of Modification 6 illustrated in Fig. 12, the first conductor film 210 is made up of (i) a first portion which extends in a vertical direction and is belt-shaped and (ii) a second portion which extends leftwards from an intermediate part of the first portion and is belt-shaped. On the other hand, the second conductor film 220 has a substantially vertically long rectangular shape. According to the film antenna 200 of Modification 6, the second portion of the first conductor film 210 and the second conductor film 220 are juxtaposed in the vertical direction (z-axis direction in Fig. 12) so as to face each other with the feed section 230 sandwiched therebetween. That is, according to the film antenna 200 of Modification 6, the feed section 230 is provided between the second portion of the first conductor film 210 and an upper part of the second conductor film 220. In addition, according to the film antenna 200 of Modification 6, the short-circuit member 240, which is belt-shaped, causes a left end part of the second portion of the first conductor film 210 and an upper-left corner of the second conductor film 220 to short-circuit.

According to any one of the film antennas 200 (reversed F-shaped antennas) of Modifications 4 through 6, the feed section 230 is provided within a non-overlapping region 110A. Therefore, with any one of the film antennas 200 of Modifications 4 through 6, it is possible to obtain an excellent radiation characteristic as is the case of the film antenna 200 in accordance with the above-described embodiment.

### [Modifications 7 and 8]

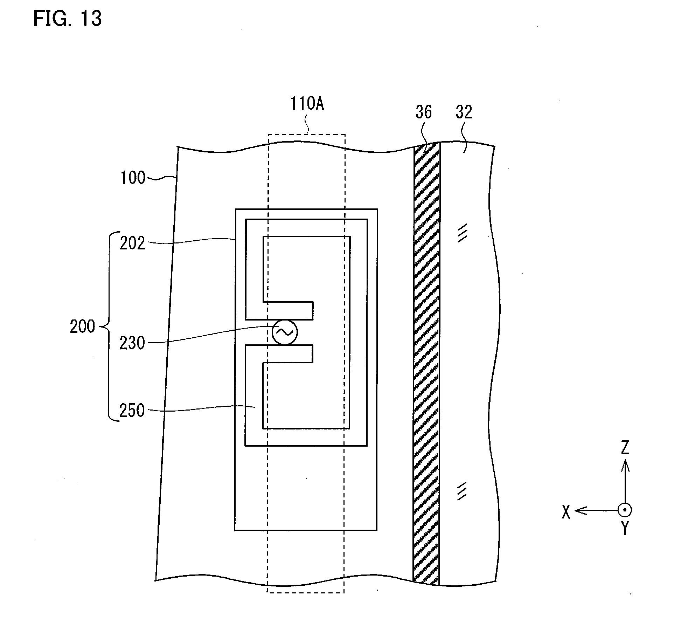

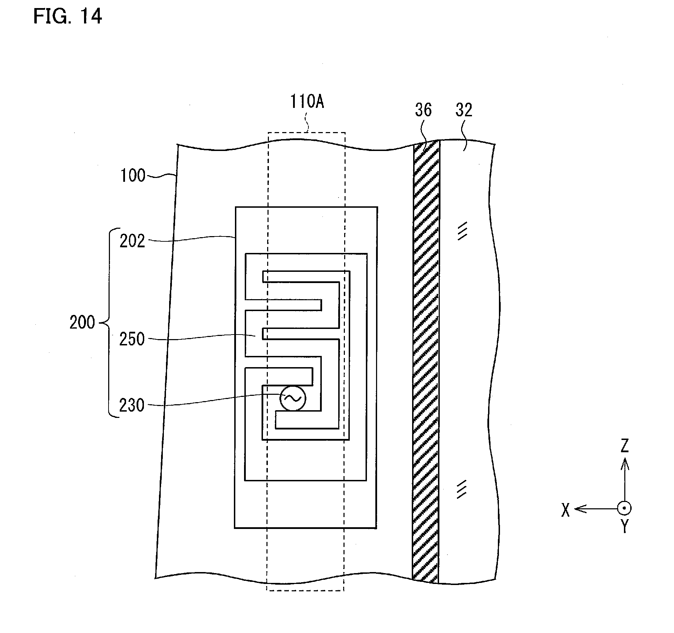

Figs. 13 and 14 respectively illustrate Modifications 7 and 8 of the film antenna 200 in accordance with the present embodiment. Film antennas 200 of Modifications 7 and 8 are each a loop antenna configured to include (i) a flexible substrate 202, (ii) a ring-shaped conductor film 250 serving as an antenna element, and (iii) a feed section 230 provided between a starting point of and an ending point of the ring-shaped conductor film 250.

According to the film antenna 200 of Modification 7 illustrated in Fig. 13, the ring-shaped conductor film 250 extends, so as to form a vertically long rectangular shape surrounding the feed section 230, from the feed section 230 serving as a starting point and as an ending point. Specifically, the ring-shaped conductor film 250 is configured to include (i) a first straight line portion that extends leftwards from the feed section 230 serving as the starting point, (ii) a second straight line portion that extends upwards from a left end part of the first straight line portion, (iii) a third straight line portion that extends rightwards from an upper end part of the second straight line portion, (iv) a fourth straight line portion that extends downwards from a right end part of the third straight line portion, (v) a fifth straight line portion that extends leftwards from a lower end part of the fourth straight line portion, (vi) a sixth straight line portion that extends upwards from a left end part of the fifth straight line portion, and (vii) a seventh straight line portion that extends rightwards from an upper end part of the sixth straight line portion toward the feed section 230 serving as the ending point.

According to the film antenna 200 of Modification 8 illustrated in Fig. 14, the ring-shaped conductor film 250 extends, so as to form a vertically long rectangular shape surrounding the feed section 230, from the feed section 230 serving as a starting point and as an ending point, while the ring-shaped conductor film 250 partially includes a portion that extends in a meandering manner. Specifically, the ring-shaped conductor film 250 is configured to include (i) a meandering portion that extends upwards from the feed section 230 serving as the starting point such that the meandering portion extends in a meandering manner (while turning multiple times), (ii) a first straight line portion that extends rightwards from an upper end part of the meandering portion, (iii) a second straight line portion that extends downwards from a right end part of the first straight line portion, (iv) a third straight line portion that extends leftwards form a lower end part of the second straight line portion, (v) a fourth straight line portion that extends upwards from a left end part of the third straight line portion, and (vi) a fifth straight line portion that extends rightwards from an upper end part of the fourth straight line portion toward the feed section 230 serving as the ending point.

According to any one of the film antennas 200 (loop antennas) of Modifications 7 and 8, the feed section 230 is provided within a non-overlapping region 110A. Therefore, with any one of the film antennas 200 of Modifications 7 and 8, it is possible to obtain an excellent radiation characteristic as is the case of the film antenna 200 in accordance with the above-described embodiment.

### [Modification 9]

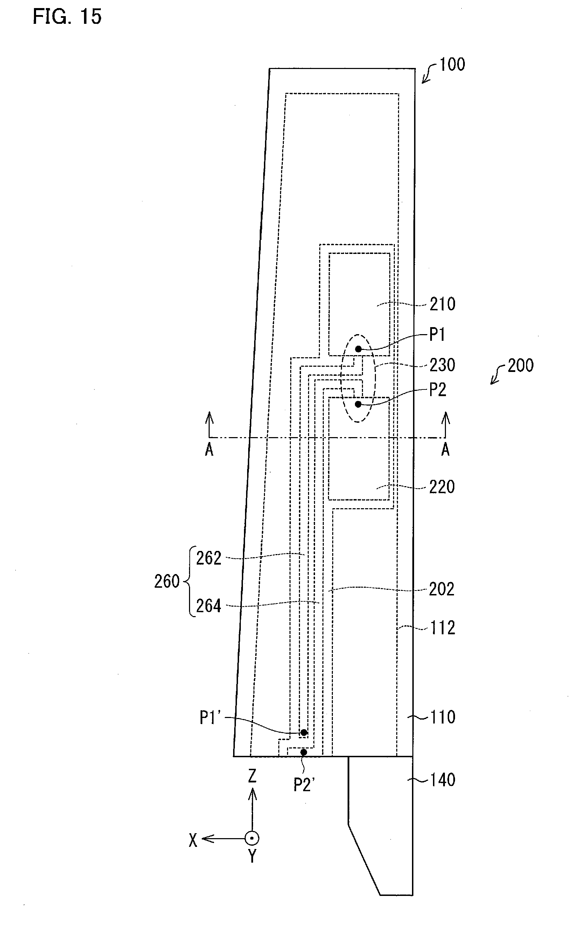

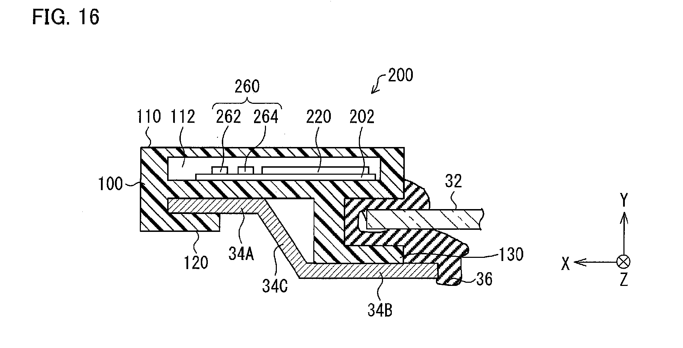

Figs. 15 and 16 illustrate Modification 9 of the film antenna 200 in accordance with the present embodiment. Fig. 15 is a plan view illustrating Modification 9 of the film antenna 200 in accordance with the present embodiment. Fig. 16 is a cross-sectional view taken along the line A-A across the film antenna 200 illustrated in Fig. 15

As illustrated in Fig. 15, a film antenna 200 in accordance with Modification 9 includes (1) a flexible substrate 202, (2) a dipole antenna including (a) a first conductor film 210 serving as a first antenna element, (b) a second conductor film 220 serving as a second antenna element, and (c) a feed section 230, and (3) a planar transmission line 260 that extends from the feed section 230 to a peripheral end part of a main body 100. The first conductor film 210, the second conductor film 220, the feed section 230 and the planar transmission line 260 are each provided on a front surface of a flexible substrate 202. The first conductor film 210 and the second conductor film 220, each of which has a quadrilateral shape, are juxtaposed in a vertical direction (z-axis direction in Fig. 15) so as to face each other with the feed section 230 sandwiched therebetween. The feed section 230 includes (i) a feed point P1 provided at a lower end part of the first conductor film 210 and (ii) a feed point P2 provided at an upper end part of the second conductor film 220.

The planar transmission line 260 is a thin-film conductor that extends in an inner space 112, and serves as a feed line for the film antenna 200. To feed electricity to the film antenna 200, one end part of the planar transmission line 260 is connected to the feed point 230 while the other end part is connected to a coaxial cable.

The planar transmission line 260 in accordance with Modification 9 includes a center conductor 262 and a ground conductor 264 which are provided on a single plane. The center conductor 262 and the ground conductor 264 constitute a coplanar line. The center conductor 262 is a belt-shaped, thin-film conductor that extends from the feed point P1 to a lower end part of the main part 110 of the window frame 10. The ground conductor 264 is a belt-shaped, thin-film conductor that extends (i) from a starting end of the center conductor 262 to a terminal end of the center conductor 262, (ii) on a first side of the center conductor 262, and (iii) along the center conductor 262. A starting end of the ground conductor 264 is connected to the feed point P2.

More specifically, the center conductor 262 (1) linearly extends (i) between the first conductor film 210 and the second conductor film 220, (ii) from the feed point P1, and (iii) leftwards (in a positive direction of an x-axis in Fig. 15), (2) turns, at a right angle, downwards (in a negative direction of a z-axis in Fig. 15), and then (3) linearly extends (i) in a longitudinal direction of the window frame 10 and (ii) to a lower end part of the main part 110. Accordingly, the ground conductor 264 (1) linearly extends (i) between the first conductor film 210 and the second conductor film 220, (ii) from the feed point P2, (iii) on the first side of the center conductor 262, (iv) along the center conductor 262, and (v) leftwards (in the positive direction of the x-axis in Fig. 15), (2) turns, at a right angle, downwards (in the negative direction of the z-axis in Fig. 15), and then (3) linearly extends (i) on the first side of the center conductor 262, (ii) along the center conductor 262, and (iii) to the lower end part of the main part 110.

To the terminal end part of the center conductor 262, a connection point P1' is provided. To the connection point P1', an internal conductor at a tip part of the coaxial cable is connected. To a terminal end part of the ground conductor 264, a connection point P2' is provided. To the connection point P2', an external conductor at the tip part of the coaxial cable is connected. This allows electricity to be fed to the first conductor film 210 and the second conductor film 220 via the coaxial cable and the planar transmission line 260.

Note that the coaxial cable can be connected to the connection point P1' and the connection point P2' (i) directly by soldering or the like or (ii) indirectly with the use of a connector or the like. In addition, to the connection point P1' and the connection point P2', a connected body (e.g. part of an antenna circuit) other than the coaxial cable can be connected.

The significance of the film antenna 200 in accordance with Modification 9 lies in the fact that the planar transmission line 260 instead of a coaxial cable is used as a feed line that extends in the inner space 112. This makes it unnecessary to configure the film antenna 200 of Modification 9 so as to run the coaxial cable in the inner space 112, and therefore allows the inner space 112 to be thin. In addition, it is unnecessary to provide, in the inner space 112, fixing means for fixing the coaxial cable. This allows the shape of the inner space 112 to be simple.

The planar transmission line 260, in particular, is configured such that each member of the planar transmission line 260 has a shape and dimensions (e.g. a length and a width of the center conductor 262, a length and a width of the ground conductor 264, a space between the center conductor 262 and the ground conductor 264 and the like) which are defined so that impedance of the planar transmission line 260 matches that of a general coaxial cable (e.g. 50 Ω). This causes the planar transmission line 260 to serve as a feed line in the film antenna 200 while not serving as part of the antenna elements of the film antenna 200. Therefore, it is possible to feed electricity to the film antenna 200 without affecting an antenna characteristic of the film antenna 200.

The planar transmission line 260 is provided on the flexible substrate 202 on which the first conductor film 210 and the second conductor film 220 are provided. That is, the planar transmission line 260 is integrated with the flexible substrate 202. This allows the planar transmission line 260 to be provided at an exact location by merely attaching the flexible substrate 202 to a predetermined location. As a result, a feed line in the inner space 112 is unlikely to bend, and therefore the film antenna 200 can stably obtain an excellent antenna characteristic.

Furthermore, a part of the planar transmission line 260 (the center conductor 262 and the ground conductor 264) in accordance with Modification 9, which part linearly extends in the vertical direction (z-axis direction in Fig. 15), is stacked together with a first plane part 34A (made of metal) that is a part of a door frame 34. In so doing, a bottom plate (made of resin and thin-plate-like) of the main part 110 is sandwiched between the part of the planar transmission line 260 and the first plane part 34A as illustrated in Fig. 16. This allows the first plane part 34A to be regarded as a conductor layer provided on a back side of the flexible substrate 202. In a case where the first plane part 34A is regarded as a conductor layer on the back side of the flexible substrate 202, it is possible to realize a planar transmission line (coplanar line) which is constituted by conductor layers provided on respective both surfaces of the flexible substrate 202. According to the film antenna 200, it is only necessary to provide a conductor layer on one surface of the flexible substrate 202. This allows for a reduction in cost for producing the film antenna 200.

In a case where the first plane part 34A is included in the structure of the coplanar line, each member of the planar transmission line 260 is preferably designed so that excellent impedance characteristics including that of the first plane part 34A can be obtained. In addition, a thickness of the bottom plate of the main part 110 is preferably adjusted to a proper thickness so that an excellent impedance characteristic can be obtained at the planar transmission line 260.

### [Modification 10]

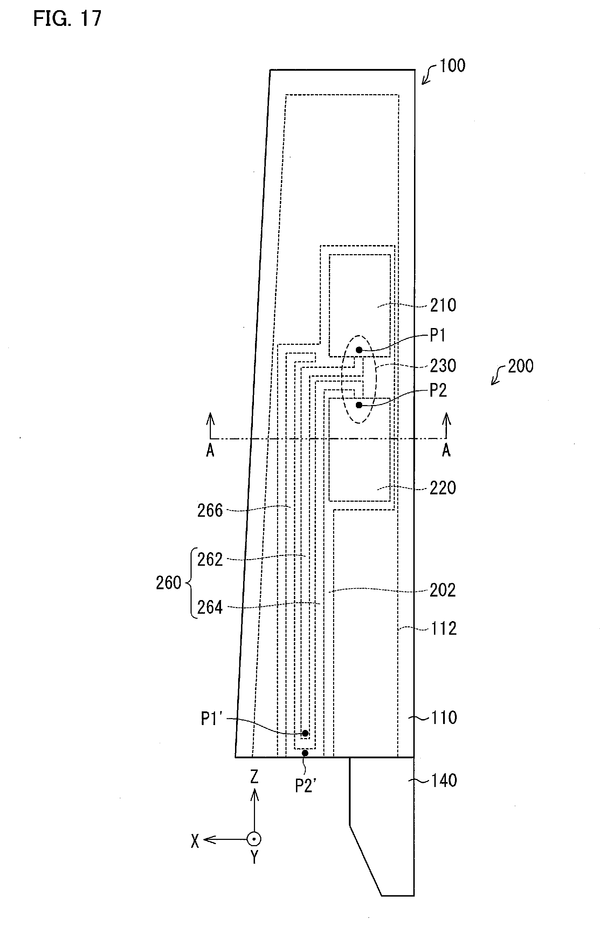

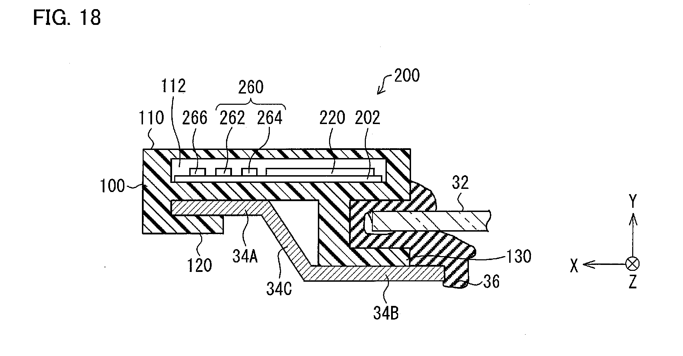

Figs. 17 and 18 illustrate Modification 10 of the film antenna 200 in accordance with the present embodiment. Fig. 17 is a plan view illustrating Modification 10 of the film antenna 200 in accordance with the present embodiment. Fig. 18 is a cross-sectional view taken along the line A-A across the film antenna 200 illustrated in Fig. 17. As illustrated in Fig. 17, a film antenna 200 in accordance with Modification 10 is different from the film antenna 200 of Modification 9 (illustrated in Fig. 15) in that a planar transmission line 260 connected to a feed point 230 further includes a ground conductor 266.

The ground conductor 266 is a belt-shaped, thin-film conductor that extends (i) from a starting end of a center conductor 262 to a terminal end of the center conductor 262, (ii) on a second side of the center conductor 262, and (iii) along the center conductor 262. More specifically, the ground conductor 266 (1) linearly extends (i) from an area in the vicinity of a feed point P1, (ii) on the second side of the center conductor 262, (iii) along the center conductor 262, and (iv) leftwards (in a positive direction of an x-axis in Fig. 17), (2) turns, at a right angle, downwards (in a negative direction of a z-axis in Fig. 17), and then (3) linearly extends (i) on the second side of the center conductor 262, (ii) along the center conductor 262, and (iii) to a lower end part of a main part 110 of a window frame 10. A terminal end of the ground conductor 266 is connected to a terminal end of the ground conductor 264. This causes the ground conductors 264 and 266 to electrically constitute a single line which is connected to a feed point P2. According to the planar transmission line 260 in accordance with Modification 10, the ground conductor 266 is thus provided. This causes a coplanar line to be constituted by (i) the center conductor 262 and (ii) the ground conductors 264 and 266 which are symmetrically provided so as to sandwich the center conductor 262 therebetween.

According to Modification 10 also, a part of the planar transmission line 260, which part linearly extends in a vertical direction, is stacked together, via a bottom plate (made of resin and thin-plate-like) of the main part 110, with a first plane part 34A (made of metal) that is a part of a door frame 34 (see Fig. 18). This allows the first plane part 34A to be regarded as a conductor layer on a back side of a flexible substrate 202. In a case where the first plane part 34A is regarded as a conductor layer provided on the back side of the flexible substrate 202, it is possible to realize a planar transmission line (coplanar line) which is constituted by conductor layers provided on respective both surfaces of the flexible substrate 202.

According to Modifications 9 and 10, a coplanar line is used as the planar transmission line 260. Alternatively, it is possible to use a microstrip line as the planar transmission line 260. The microstrip line is configured to include, for example, (i) a center conductor provided on a front surface of a base material (e.g. flexible substrate 202) and (ii) a ground plane provided on a back surface of the base material.

According to Modifications 9 and 10, a terminal end of the planar transmission line 260 is located at the lower end part of the main part 110. Alternatively, the terminal end can be provided anywhere, provided that the terminal end is located at a peripheral end part of a main body 100 of the window frame 10.

The film antennas 200 in accordance with Modifications 9 and 10 can each be described as an "antenna device including (i) a base material, (ii) an antenna element provided on a front surface of the base material, and (iii) a planar transmission line that reaches, on the front surface of the base material, a feed point of the antenna element." Needless to say, an antenna device described as such can be used as an antenna device that is provided on various objects other than a window frame (examples of the various objects encompass, of course, objects other than an automobile). In a case where the antenna device is provided on any object, the following are true as are the cases of the film antennas 200 of Modifications 9 and 10: (1) it is unnecessary to run a coaxial cable on a front surface of the object, so that a space in which to provide the coaxial cable is unnecessary; (2) it is possible to handle an antenna element and a planar transmission line as one body; and (3) it is possible to stably and reliably provide, on the front surface of the object, a feed line (i.e. planar transmission line) without causing bending or the like of the feed line.

The film antennas 200 in accordance with Modifications 9 and 10 can be described as an "antenna device to be provided on one surface of the object, at least part of the planar transmission line overlapping a metal member provided on the other surface of the object." According to such an antenna device, it is only necessary to provide a conductor layer on one surface of the base material. Even in this case, it is possible to realize, by providing the antenna device on the object, a planar transmission line which is constituted by conductor layers provided on respective both surfaces of the base material. This makes it unnecessary to, for example, provide conductor layers on both surfaces of the base material, and therefore brings about an effect such as a reduction in cost for producing the antenna device.

### [Modifications 1 through 3 of Window Frame]

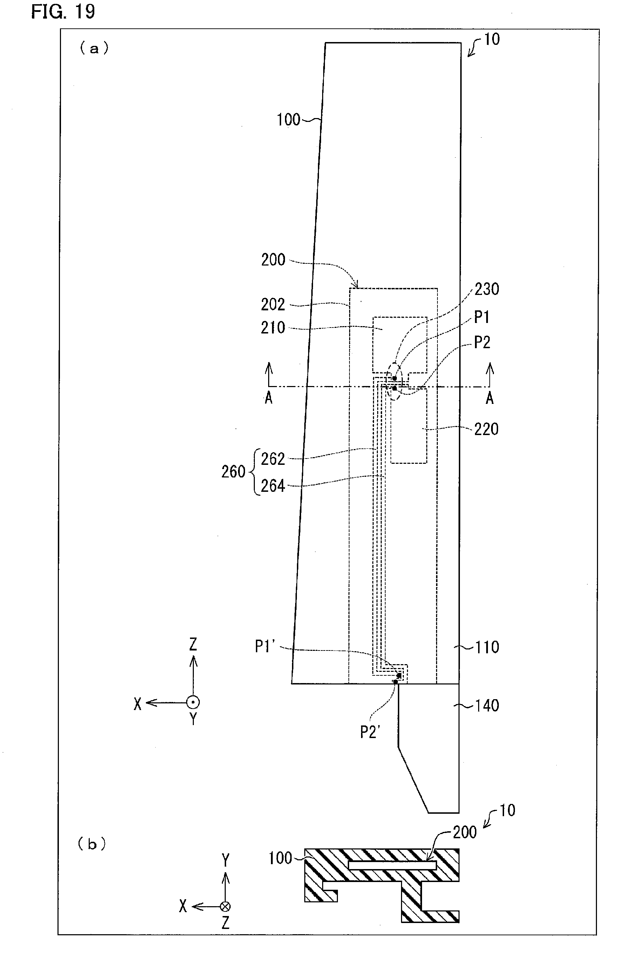

The following description will discuss, with reference to Figs. 19 through 21, Modifications 1 through 3 of the window frame 10 in accordance with the present embodiment. Figs. 19 through 21 respectively illustrate Modifications 1 through 3 of the window frame 10 in accordance with the present embodiment. In each of Figs. 19 through 21, (a) is a plan view of a window frame 10 and (b) is a cross-sectional view taken along the line A-A across the window frame 10 illustrated in (a).

According to each of the window frames 10 of Modifications 1 through 3, the film antenna 200 is buried in a main body 100 which is made of resin (see (b) of Figs. 19 through 21). Therefore, in a case where a coaxial cable is soldered to a front surface of the film antenna 200 (particularly, front surface on the vehicle-exterior side), there is a risk that bulging solder may cause unevenness and shrinkage to be generated on an appearance surface (front surface on the vehicle-exterior side) of the main body 100.

Therefore, the window frames 10 of Modifications 1 through 3 are each configured, as illustrated in (a) of Figs. 19 through 21, such that (i) a planar transmission line 260, which extends from a feed section 230 of the film antenna 200 to a peripheral end part of the main body 100, is provided and (ii) the planar transmission line 260 and a coaxial cable are connected to each other at the peripheral end part. This allows unevenness and shrinkage, which may occur on the appearance surface of the main body 100, to be hidden in a door body 31 of a rear seat door 30 (see Fig. 3). As a result, it is possible to maintain good appearance of a vehicle 20 on which the window frame 10 is mounted.

### (Modification 1)

As illustrated in (a) of Fig. 19, the film antenna 200 included in the window frame 10 of Modification 1 includes (1) a flexible substrate 202, (2) a dipole antenna including (i) a first conductor film 210 serving as a first antenna element, (ii) a second conductor film 220 serving as a second antenna element, and (iii) a feed section 230, and (3) a planar transmission line 260 that extends from the feed section 230 to a lower end part of the main body 100. The first conductor film 210, the second conductor film 220, the feed section 230 and the planar transmission line 260 are each provided on a front surface of the flexible substrate 202.

The planar transmission line 260 is a coplanar line including a center conductor 262 and a ground conductor 264. The center conductor 262 is a belt-shaped, thin-film conductor that extends from a feed point P1 to the lower end part of the main body 100. The ground conductor 264 is a belt-shaped, thin-film conductor that extends, along the center conductor 262, from a feed point P2 to the lower end part of the main body 100.

At a terminal end part of the center conductor 262, a connection point P1' is provided. To the connection point P1', an internal conductor at a tip part of a coaxial cable is soldered. At a terminal end part of the ground conductor 264, a connection point P2' is provided. To the connection point P2', an external conductor at the tip part of the coaxial cable is soldered. This allows electricity to be fed to the first conductor film 210 and the second conductor film 220 via the coaxial cable and the planar transmission line 260

The parts, at which the connection point P1' and the connection point P2' are provided, that is, the parts to which the planar transmission line 260 and the coaxial cable are soldered, are the lower end part of the main body 100 which is covered with the door body 31 of the rear seat door 30 (see Fig. 3). Therefore, as has been described, unevenness and shrinkage, which may be generated on the appearance surface of the main body 100, can be hidden in the door body 31.

Note that the planar transmission line 260 is integrated with the dipole antenna, and therefore does not require soldering to be connected to the dipole antenna. This eliminates a risk that unevenness and shrinkage may be generated on parts of the appearance surface of the main body 100, at which parts the feed point P1 and the feed point P2 are provided, that is, to which parts the dipole antenna and the planar transmission line 260 are connected.

### (Modification 2)

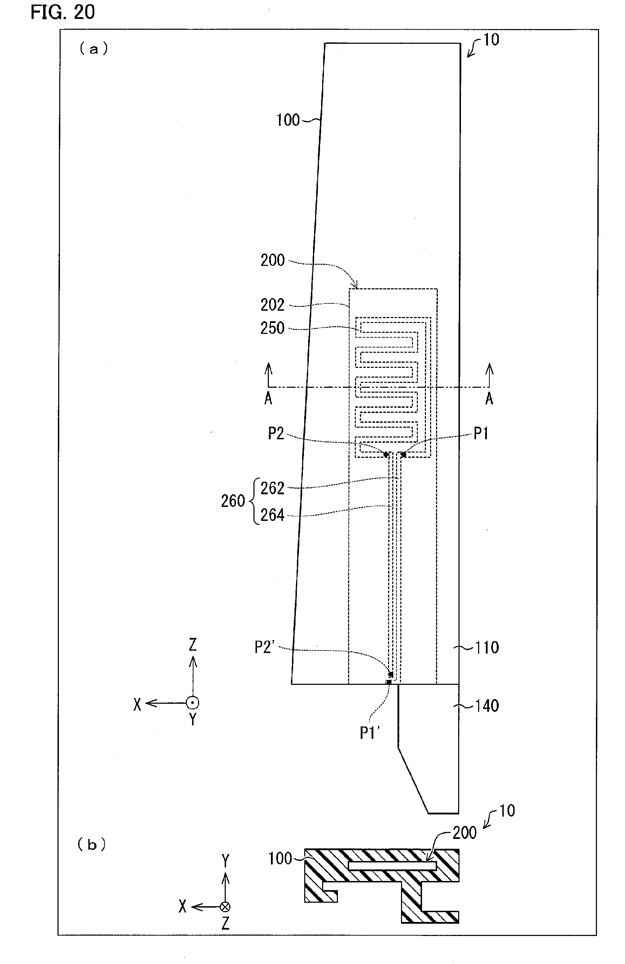

As illustrated in (a) of Fig. 20, the film antenna 200 included in the window frame 10 of Modification 2 includes (1) a flexible substrate 202, (2) a loop antenna including (i) a ring-shaped conductor film 250 serving as an antenna element and (ii) a feed section 230 provided between a starting point of the ring-shaped conductor film 250 and an ending point of the ring-shaped conductor film 250, and (3) a planar transmission line 260 that extends from the feed section 230 to a lower end part of the main body 100. The first conductor film 210, the second conductor film 220, the feed section 230 and the planar transmission line 260 are each provided on a front surface of the flexible substrate 202.

As is the case of Modification 1, the planar transmission line 260 is a coplanar line that includes (i) a center conductor 262 that extends from a feed point P1 provided on the first conductor film 210 to a lower end part of the main body 100 and (ii) a ground conductor 264 that extends, along the center conductor 262, from a feed point P2 provided on the second conductor film 220 to the lower end part of the main body 100.

Modification 2 is similar to Modification 1 in that the connection point P1' and the connection point P2', which are to be soldered to the planar transmission line 260 and a coaxial cable, are provided at the lower end part of the main body 100, so that unevenness and shrinkage, which may be generated on an appearance surface of the main body 100, are hidden in a door body 31. Modification 2 is also similar to Modification 1 in that the planar transmission line 260 is integrated with the antenna element of a dipole antenna.

### (Modification 3)

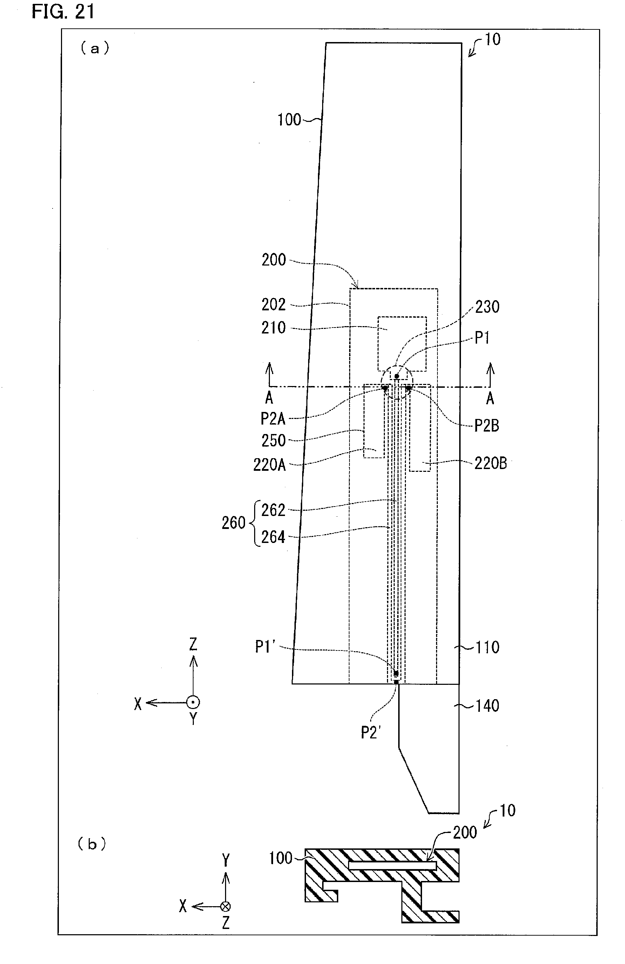

As illustrated in (a) of Fig. 21, the film antenna 200 included in the window frame 10 of Modification 3 includes (1) a flexible substrate 202, (2) an antenna including (i) a first conductor film 210 serving as a first antenna element, (ii) second conductor films 220A and 220B serving as a second antenna element, and (iii) a feed section 230, and (3) a planar transmission line 260 that extends from the feed section 230 to a lower end part of the main body 100. The first conductor film 210, the second conductor films 220A and 220B, the feed section 230 and the planar transmission line 260 are each provided on a front surface of the flexible substrate 202 whose longitudinal direction extends vertically.

The planar transmission line 260 is a coplanar line that includes (i) a center conductor 262 that extends from a feed point P1 provided on the first conductor film 210 to the lower end part of the main body 100 and (ii) a ground conductor 264 that (a) extends, along a left side of the center conductor 262, from a feed point P2A provided on the second conductor film 220A to the lower end part of the main body 100 and then (b) extends, along a right side of the center conductor 262, from the lower end part of the main body 100 to a feed point P2B provided on the second conductor film 220B.

Modification 3 is similar to Modification 1 in that a connection point P1' and a connection point P2', which are to be soldered to the planar transmission line 260 and a coaxial cable, are provided at the lower end part of the main body 100, so that unevenness and shrinkage, which may be generated on an appearance surface of the main body 100, are hidden in a door body 31. Modification 3 is also similar to Modification 1 in that the planar transmission line 260 is integrated with the antenna element of an antenna.

### [Modification 4 of Window Frame]

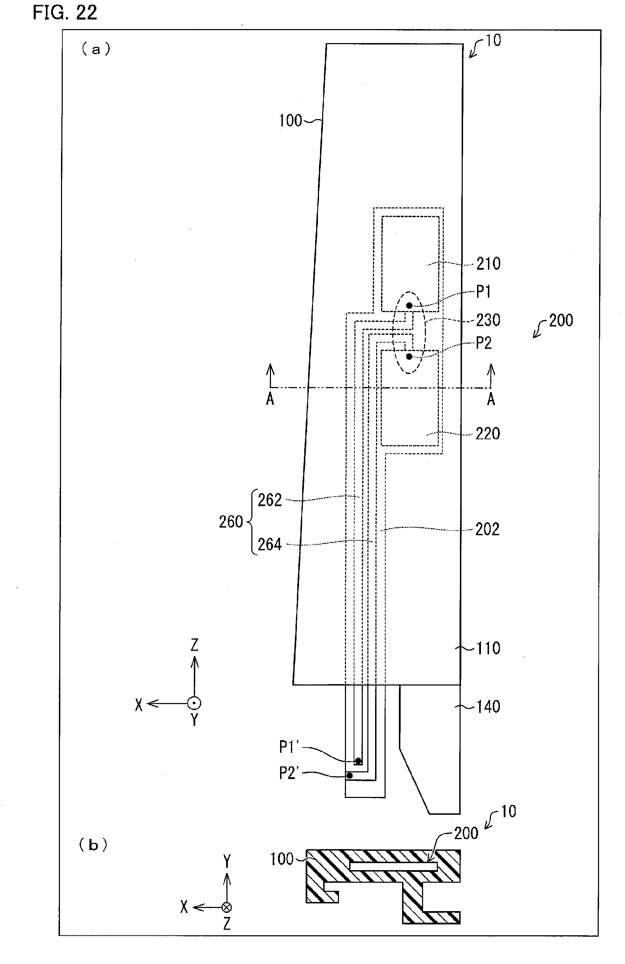

Modification 4 of the window frame 10 in accordance with the present embodiment will be described below with reference to Fig. 22. (a) of Fig. 22 is a plan view of the window frame 10 in accordance with Modification 4. (b) of Fig. 22 is a cross-sectional view taken along the line A-A across the window frame 10 illustrated in (a) of Fig. 22.

The film antenna 200 included in the window frame 10 in accordance with Modification 4 is similar in configuration to the film antenna 200 illustrated in Fig. 15. Note, however, that the window frame 10 in accordance with Modification 4 is different from the window frame 10 illustrated in Fig. 15 in that a lower end part of a film antenna 200 extends out (protrudes out) of a main body 100.

As illustrated in (a) of Fig. 22, the planar transmission line 260 included in the film antenna 200 extends from a feed section 230 to the lower end part of the film antenna 200. A connection point P1', to which an internal conductor of a coaxial cable is soldered, and a connection point P2', to which an external conductor of the coaxial cable is soldered, are provided outside the main body 100. Therefore, even in a case where the film antenna 200 is buried in the main body 100 made of resin as illustrated in (b) of Fig. 22, there is no risk that soldering may cause unevenness and shrinkage to be generated on a front surface of the main body 100. In addition, since it is unnecessary to draw the coaxial cable into the main body 100, it is easy to mount the window frame 10 on a vehicle.

According to Modification 4, it is possible to contain the film antenna 200 in an inner space of the main body 100 instead of burying the film antenna 200 in the main body 100 (see (b) of Fig. 22). In any case, it is possible to realize a window frame 10 that can be easily mounted.

### [Modification 5 of Window Frame]

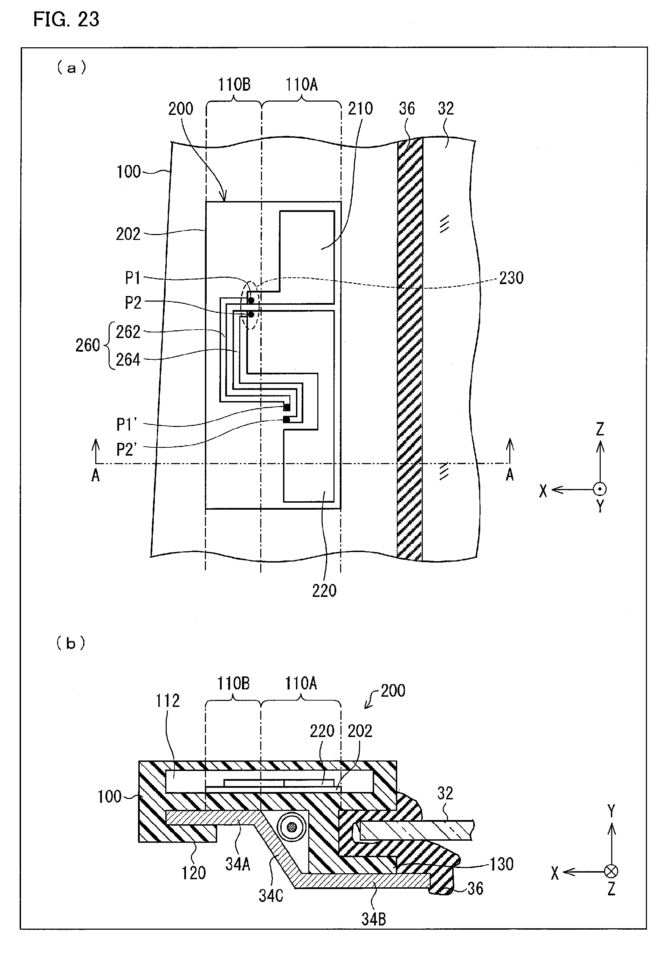

Modification 5 of the window frame 10 in accordance with the present embodiment will be described with reference to Fig. 23. (a) of Fig. 23 is a plan view of the window frame 10. (b) of Fig. 23 is a cross-sectional view taken along the line A-A across the window frame 10 illustrated in (a) of Fig. 23.

According to the window frame 10 of Modification 5, a feed section 230 of a film antenna 200 is provided in an overlapping region 110B as illustrated in (a) of Fig. 23. Note that the overlapping region 110B refers to a region that overlaps a first plane part 34A of a door frame 34 when a main body 100 in a plan view is viewed from a vehicle-exterior side. As illustrated in (b) of Fig. 23, there is no gap in the overlapping region 110B between the main body 100 and the door frame 34. This makes it impossible to (i) draw out, from a back surface of the main body 100, a coaxial cable which is connected to film antenna 200 at the feed section 230 and then (ii) provide the coaxial cable in a gap between the main body 100 and the door frame 34.

Therefore, the window frame 10 of Modification 5 is configured to (i) provide a planar transmission line 260 that extends from the feed section 230 to a non-overlapping region 110A which overlaps neither the window guide 36 nor the first plane part 34A (see (a) of Fig. 23) and (ii) connect the planar transmission line 260 and the coaxial cable to each other in the non-overlapping region 110A. This allows the coaxial cable, which is connected to the planar transmission line 260 at the connection points P1 and P2, to be provided on the vehicle-interior side of the main body 100.

The film antenna 200 included in the window frame 10 of Modification 5 will be described below in more detail with reference to (a) of Fig. 23.

As illustrated in (a) of Fig. 23, the film antenna 200 included in the window frame 10 of Modification 5 includes (1) a flexible substrate 202, (2) a dipole antenna including (a) a first conductor film 210 serving as a first antenna element, (b) a second conductor film 220 serving as a second antenna element, and (c) a feed section 230, and (3) a planar transmission line 260 that extends from the feed section 230. The first conductor film 210, the second conductor film 220, the feed section 230 and the planar transmission line 260 are each provided on a front surface of the flexible substrate 202.

The first conductor film 210 and the second conductor film 220 are juxtaposed in a vertical direction (z-axis direction in Fig. 23) so as to face each other with the feed section 230 sandwiched therebetween. The first conductor film 210 is made up of (i) a main portion having a vertically long rectangular shape and (ii) a protruding portion that protrudes leftwards (in a positive direction of an x-axis in Fig. 23) from a lower-left corner of the main portion. The second conductor film 220 is made up of (i) a first main portion having a horizontally long rectangular shape, (ii) a second main portion having a vertically long rectangular shape, and (iii) a belt-shaped portion that connects, to each other, the first main portion and the second main portion which are juxtaposed in the vertical direction. The belt-shaped portion is provided so as to connect, to each other, a lower-right corner of the first main portion and an upper-right corner of the second main portion.

To a feed point P1 provided at a left-end part of the protruding portion of the first conductor film 210, a center conductor 262 of the planar transmission line 260 is connected. To a feed point P2 provided at an upper-left corner of the first main portion of the second conductor film 220, a ground conductor 264 of the planar transmission line 260 is connected. The feed point P1 and the feed point P2 are both provided in the overlapping region 110B.

The planar transmission line 260 is a coplanar line including the center conductor 262 and the ground conductor 264. The center conductor 262 (1) linearly extends leftwards (in a positive direction of the x-axis in Fig. 23) from the feed point P1, (2) turns, at a right angle, downwards (in a negative direction of the z-axis in Fig. 23) and then extends along a left side of the first main portion of the second conductor film 220, and then (3) turns, at a right angle, rightwards (in a negative direction of the x-axis in Fig. 23) and then extends along a lower side of the first main portion of the second conductor film 220. On the other hand, the ground conductor 264 (1) linearly extends leftwards (in the positive direction of the x-axis in Fig. 23) from the feed point P2 of the feed section 230, (2) turns, at a right angle, downwards (in the negative direction of the z-axis in Fig. 23) and then extends (a) on a right side of the center conductor 262 and (b) along the left side of the first main portion of the second conductor film 220, and (3) turns, at a right angle, rightwards (in the negative direction of the x-axis) and then extends (a) on an upper side of the center conductor 262 and (b) along the lower side of the first main portion of the second conductor film 220, and then (4) turns, at a right angle, downwards (in the negative direction of the z-axis in Fig. 23) so as to surround a terminal end part of the center conductor 262 and then turns, at a right angle, leftwards (in the positive direction of the x-axis in Fig. 23).

To a connection point P1' provided at the terminal end part of the center conductor 262, an internal conductor of a coaxial cable is connected. To a connection point P2' provided at a terminal end part of the ground conductor 264, an external conductor of the coaxial cable is connected.

According to Modification 5, when the main body 100 in a plan view is viewed from the vehicle-exterior side, the terminal end part (opposite an end part on a feed-section-230 side) of the planar transmission line 260 is provided in a part of the non-overlapping region 110A, which part overlaps neither the first plane part 34A of the door frame 34 nor a holding section 130 (see (b) of Fig. 23). In the part of the non-overlapping region 110A, there is a gap between the main body 100 and the door frame 34 as illustrated in (b) of Fig. 23. This allows the coaxial cable, which is connected to the planar transmission line 260 at the connection points P1' and P2', to be provided in the gap.

Note, however, that the terminal end part of the planar transmission line 260 only needs to be located in a region that does not overlap the window guide 36, and does not need to be located in a region that does not overlap the holding section 130. In a case where the a terminal end part of the window guide 36 is located in a region that overlaps the holding section 130, the coaxial cable is to be buried in the holding section 130.

### [Summary]

As has been described, a window frame in accordance with the present invention is to be attached to a metal frame, the metal frame having an opening in which a window is to be provided and including (i) a first plane part located on an outer side of the metal frame and (ii) a second plane part located on an inner side of the metal frame and located closer to a vehicle-interior side than is the first plane part, said window frame including: a window frame main body to be attached to at least part of the metal frame, which part is located on a vehicle-exterior side; and an antenna incorporated into the window frame main body, the window frame main body including a holding section which is a part facing the second plane part and which holds an end part of the window by use of a window guide made of rubber, and the antenna including a feed section located so as not to overlap the window guide when the window frame main body in a plan view is viewed from the vehicle-exterior side.

According to the window frame, the antenna is incorporated into the window frame main body. This allows the antenna to be provided without affecting an external appearance of a vehicle. In addition, since the window frame main body is a component to be attached to a relatively high location of the vehicle, the antenna is inevitably provided at a relatively high location of the vehicle. This allows an increase in radiant efficiency of the antenna.

The inventors found that in a case where, in particular, an antenna is incorporated into a window frame, it is possible to restrict a reduction in radiant efficiency of the antenna by providing a feed section of the antenna such that the feed section does not overlap a window guide. With the window frame, it is therefore possible to realize a vehicle-specific antenna device that can obtain an excellent antenna characteristic while restricting an effect on the external appearance the vehicle.

According to an embodiment of the present invention, the window frame is further configured such that EPDM (ethylene-propylene-diene rubber) is used as a material of which the window guide is made. In addition, the window frame is configured such that the material of which the window guide is made contains carbon black.

Conventionally, in order for the performance of a window guide to be increased, EPDM is used as a material of which the window guide is made. However, in a case where EPDM is used for a window guide, a radiation loss of an antenna is greater. This makes it difficult to provide an antenna in a window frame. In particular, in a case where EPDM contains carbon black for the purpose of increasing strength of a window guide as is sometimes a case, a radiation loss of an antenna is even greater. Under such circumstances, the inventors found that even in a case where EPDM containing carbon black is used for a window guide, a reduction in radiant efficiency of an antenna can be restricted by providing a feed section of the antenna so that the feed section is located not to overlap the window guide. Therefore, with the window frame of the present invention, it is possible to relatively easily provide an antenna in a window frame even in a case where a conventional window guide is used as is without any modifications.

According to the embodiment of the present invention, the window frame is preferably further configured such that the feed section of the antenna is located so as to overlap neither the window guide nor the first plane part.

The inventors found that in a case where an antenna is incorporated into a window frame, it is possible to further restrict a reduction in radiant efficiency of the antenna by providing a feed section of the antenna such that the feed section does not overlap not only a window guide but also the first plane part. With the window frame, it is therefore possible to realize a vehicle-specific antenna device that can obtain an excellent antenna characteristic while restricting an effect on the external appearance the vehicle.

According to the embodiment of the present invention, the window frame can be further configured such that the antenna further includes a planar transmission line that extends, on a base material of the antenna, from the feed section of the antenna to a peripheral end part of the window frame main body.

According to the configuration, it is unnecessary to run a coaxial cable in the window frame main body for feeding electricity. This allows a structure of the window frame main body to be simple, and therefore allows for a reduction in cost for producing the window frame main body. In addition, since the planar transmission line does not radiate radio waves, it is possible to feed electricity to the antenna without affecting the antenna characteristics of the antenna.

According to the embodiment of the present invention, the window frame can be further configured such that a first end part of the planar transmission line, which first end part is opposite a second end part on a feed-section side, extends from the window frame main body.

According to the configuration, it is unnecessary to draw the coaxial cable into the window frame main body for connecting the planar transmission line and the coaxial cable to each other. This makes it easy to mount the window frame on a vehicle.

According to the embodiment of the present invention, the window frame can be further configured such that at least part of the planar transmission line (i) overlaps the first plane part of the metal frame and (ii) extends in a longitudinal direction of the window frame main body to the peripheral end part of the window frame main body.

According to the configuration, the first plane part can be regarded as a conductor layer provided on a back surface of a base material of the planar transmission line. This makes it possible to realize, by providing a conductor layer only on a front surface of the base material, a planar transmission line which is constituted by conductor layers provided on respective both surfaces of the base material. That is, it is only necessary to provide a conductor layer on one surface of the base material. This allows for a reduction in cost for producing the planar transmission line.

According to the embodiment of the present invention, the window frame can be further configured such that the antenna is integrated with the planar transmission line and is buried in the window frame main body made of resin.

According to the configuration, the antenna and the planar transmission line are integrated with each other. This makes it unnecessary to solder the antenna and the planar transmission line to each other. Assume a case where a component obtained by soldering an antenna and a planar transmission line to each other is buried in a resin window frame main body to constitute a window frame. Such a case poses a risk that a part bulging as a result of soldering may cause unevenness and shrinkage, which are disadvantageous to an appearance surface of the window frame, to be generated. However, according to the configuration in which the antenna and the planar transmission line are integrated with each other, there is no risk of adversely affecting the appearance surface of the window frame. This makes it possible to improve good appearance of a vehicle on which the window frame is to be mounted.

According to the embodiment of the present invention, the window frame can be further configured such that when the window frame main body in a plan view is viewed from the vehicle-exterior side, the first end part of the planar transmission line is located so as to overlap a door body which constitutes, together with the metal frame, a door.

According to the configuration, in a case where the coaxial cable is soldered to the first end part of the planar transmission line which first end part is opposite the second end part on a feed-section side, it is possible to hide, with the use of the door body, unevenness and shrinkage which may be generated by bulging solder and which are disadvantageous to the appearance surface of the window frame main body. This makes it possible to improve good appearance of a vehicle on which the window frame is to be mounted.

According to the embodiment of the present invention, the window frame can be further configured such that when the window frame main body in a plan view is viewed from the vehicle-exterior side, the first end part of the planar transmission line is located so as to overlap neither the window guide nor the first plane part.

With the configuration, it is possible to (i) draw out, from a back surface of the window frame main body, the coaxial cable which is to be connected to the planar transmission line and then (ii) provide the coaxial cable in a gap between the window frame main body and the metal frame.

### [Additional Remarks]

The present invention is not limited to the description of the embodiments, but can be altered in many ways by a person skilled in the art within the scope of the claims. An embodiment derived from a proper combination of technical means disclosed in different embodiments is also encompassed in the technical scope of the present invention.

### Industrial Applicability

The present invention is suitable as a vehicle-specific window frame to be mounted on vehicles (mainly automobiles).

**Reference Signs List**

| | |
|---|---|
| 10 | Window frame |
| 20 | Vehicle |
| 30 | Rear seat door |
| 31 | Door body |
| 32 | Rear seat window (window) |
| 34 | Door frame (metal frame) |
| 34A | First plane part |
| 34B | Second plane part |
| 34C | Inclined surface |
| 36 | Window guide |
| 100 | Main body (window frame main body) |
| 110 | Main part |
| 110A | Non-overlapping region |
| 110B | Overlapping region |
| 112 | Inner space |
| 120 | Door frame supporting section |
| 130 | Holding section |
| 140 | Extending section |
| 200 | Film antenna (antenna) |
| 202 | Flexible substrate (base material) |
| 210 | First conductor film (conductor pattern) |
| 220, 220A, 220B | Second conductor film (conductor pattern) |
| 230 | Feed section |
| 240 | Short-circuit member |
| 250 | Ring-shaped conductor film |
| 260 | Planar transmission line |

## Claims

1. A window frame to be attached to a metal frame,
the metal frame having an opening in which a window is to be provided and including (i) a first plane part located on an outer side of the metal frame and (ii) a second plane part located on an inner side of the metal frame and located closer to a vehicle-interior side than is the first plane part,
said window frame comprising:
a window frame main body to be attached to at least part of the metal frame, which part is located on a vehicle-exterior side; and
an antenna incorporated into the window frame main body,
the window frame main body including a holding section which is a part facing the second plane part and which holds an end part of the window by use of a window guide made of rubber, and
the antenna including a feed section located so as not to overlap the window guide when the window frame main body in a plan view is viewed from the vehicle-exterior side.

2. The window frame as set forth in claim 1, wherein
EPDM (ethylene-propylene-diene rubber) is used as a material of which the window guide is made.

3. The window frame as set forth in claim 1 or 2, wherein
the material of which the window guide is made contains carbon black.

4. The window frame as set forth in any one of claims 1 through 3, wherein
the feed section of the antenna is located so as to overlap neither the window guide nor the first plane part when the window frame main body in a plan view is viewed from the vehicle-exterior side.

5. The window frame as set forth in any one of claims 1 through 4, wherein:
the antenna further includes a planar transmission line that extends, on a base material of the antenna, from the feed section of the antenna to a peripheral end part of the window frame main body.

6. The window frame as set forth in claim 5, wherein
a first end part of the planar transmission line, which first end part is opposite a second end part on a feed-section side, extends from the window frame main body.

7. The window frame as set forth in claim 5 or 6, wherein
at least part of the planar transmission line (i) overlaps the first plane part of the metal frame and (ii) extends in a longitudinal direction of the window frame main body to the peripheral end part of the window frame main body.

8. The window frame as set forth in any one of claims 5 through 7, wherein
the antenna is integrated with the planar transmission line and is buried in the window frame main body made of resin.

9. The window frame as set forth in any one of claims 5 through 8, wherein
when the window frame main body in a plan view is viewed from the vehicle-exterior side, the first end part of the planar transmission line is located so as to overlap a door body which constitutes, together with the metal frame, a door.

10. The window frame as set forth in any one of claims 5 through 8, wherein
when the window frame main body in a plan view is viewed from the vehicle-exterior side, the first end part of the planar transmission line is located so as to overlap neither the window guide nor the first plane part.
